# FASCICULE DE BREVET EUROPEEN

(11) **EP 2 313 959 B1**
(45) Date de publication et mention de la délivrance du brevet: **05.10.2016**
(21) Numéro de dépôt: 09784387.4
(22) Date de dépôt: 15.05.2009
(51) Int. Cl.: H02K 3/52, H02K 3/24

(54) **ROTOR D'UNE MACHINE ÉLECTRIQUE SYNCHRONE MULTIPOLAIRE À POLES SAILLANTS**
LÄUFER EINER ELEKTRISCHEN SYNCHRONEN MULTIPOLAREN SCHENKELMASCHINE
ROTOR FOR A MULTIPOLAR SYNCHRONOUS ELECTRIC MACHINE WITH SALIENT POLES

(30) Priorité: 19.05.2008 FR 0853242
(43) Date de publication de la demande: 27.04.2011
(73) Titulaire: Jeumont Electric, 59460 Jeumont (FR)
(72) Inventeur: LALOY, Daniel, F-59460 Jeumont (FR); LEGOIX, Guy, F-59600 Maubeuge (FR); DUCROT, Alain, F-59460 Jeumont (FR); AMMAR, Brahim, F-95380 Louvres (FR)
(74) Mandataire: Lebkiri, Alexandre
(86) Numéro de dépôt international: PCT/FR2009/050911
(87) Numéro de publication internationale: WO 2010/020724

(56) Documents cités:
- EP-A2- 1 276 205
- GB-A- 974 730
- GB-A- 2 425 662
- JP-A- 2001 211 607
- US-A- 3 797 106
- US-A- 3 846 651
- US-A- 4 554 475

## Description

La présente invention concerne le domaine des machines tournantes électriques synchrones comprenant un ensemble statorique et un ensemble rotorique, l'ensemble rotorique pivotant par rapport à l'ensemble statorique autour d'un axe de rotation.

Plus particulièrement, la présente invention concerne un rotor d'une machine électrique synchrone multipolaire, à pôles saillants.

D'une façon générale, les rotors à pôles saillants ont des pôles inducteurs situés à la périphérie d'une couronne du circuit magnétique.

Ces rotors sont généralement utilisés dans les applications à vitesse lente jusque 1000 tr/min en pôles feuilletés et 1500 tr/min en pôles massifs.

De façon connue, le rotor d'une machine électrique synchrone à pôles saillants comporte :
- une partie centrale formée par la couronne du circuit magnétique et par un arbre central ; pour les rotors de faible diamètre l'arbre central et la couronne du circuit magnétique ne forment qu'une seul pièce ;
- des pôles saillants ou pôles formés par une partie centrale appelée corps de pôle ou indifféremment corps polaire et d'une partie périphérique appelée épanouissement polaire ; chaque pôle est parcouru, dans sa partie centrale par une induction constante ; en revanche, à la surface du pôle au niveau d'un épanouissement polaire, l'induction est pulsée par suite de la rotation devant les encoches du stator ;
- des bobines inductrices entourant chaque corps polaire formées par un empilage de spires.

Les machines synchrones sont des machines électriques dont la vitesse de rotation de l'arbre de sortie est égale à la vitesse de rotation du champ magnétique. La magnétisation des machines tournantes à pôles saillants est obtenue par l'inducteur formé par les bobines inductrices entourant les corps polaires.

Les bobines inductrices sont disposées autour des corps polaires selon plusieurs manières.

Selon une première réalisation connue d'un rotor multipolaire à pôles saillants, chaque pôle comprenant un corps polaire et un épanouissement polaire est rapporté sur une jante ou sur un arbre au moyen de clefs, de queues d'aronde, ou de vis. Dans cette réalisation, la bobine est mise en place sur le corps polaire avant le montage de celui-ci sur la jante ou sur l'arbre.

Selon une deuxième réalisation connue de rotor synchrone à pôles saillants consiste à utiliser un corps polaire faisant partie intégrante de la jante ou de l'arbre. Seul l'épanouissement polaire massif est rapporté et fixé sur le corps polaire au moyen de nombreuses vis. La bobine inductrice est mise en place autour du corps polaire avant le montage de l'épanouissement polaire.

Quelle que soit la représentation retenue jusqu'ici, la mise sous tension des bobines inductrices provoquent un échauffement de celles-ci.

Les bobines inductrices comportent des matériaux isolants qui sont sensibles au vieillissement thermique. Pour cela, il est nécessaire de réaliser un refroidissement du rotor synchrone et plus précisément de la bobine inductrice afin d'améliorer la durée de vie des bobinages.

Pour refroidir la bobine inductrice lors de la rotation du rotor à pôles saillants, il est souhaitable que la bobine inductrice dispose d'une surface d'échange avec l'air environnant la plus grande possible.

Dans la plupart des rotors à pôles saillants connus, la bobine inductrice est refroidie naturellement par la surface de son pourtour lors de la rotation du rotor. Ce type de refroidissement a généralement une efficacité réduite.

On connaît également des rotors à pôles saillants comportant un arrangement de la bobine inductrice particulier permettant une circulation d'air entre certaines couches de la bobine inductrice, améliorant ainsi le refroidissement de la bobine inductrice. Cette circulation inter-couches est rendu possible par la réalisation d'emboutis réalisés par déformation des méplats de cuivre composant les différentes couches de la bobine inductrice.

Cependant, la déformation du cuivre de la bobine inductrice est une opération difficile à mettre en oeuvre, longue et coûteuse et demandant un processus de fabrication spécifique. D'autre part, la profondeur des embouties réalisant des espaces inter-couches est limitée par le mode de réalisation de la bobine inductrice par déformation des méplats de cuivre, la déformation des méplats étant difficilement maîtrisable.

De plus, la configuration des espaces intercouches est très sensible à la pollution des poussières et de l'humidité de l'air ou d'un fluide de refroidissement, et à ses conséquences sur les circuits électriques.

Le brevet US3846651 décrit un autre exemple d'arrangement d'une bobine inductrice permettant d'améliorer son refroidissement.

La demande de brevet JP-A-59041136 propose un autre arrangement pour améliorer le refroidissement de la bobine inductrice par l'aménagement de conduits internes dans la couronne dans le but de générer un flux d'air naturel par rotation du rotor, le flux d'air généré étant guidé entre les différentes couches de la bobine inductrice.

Dans ce contexte, l'invention vise à fournir un rotor de machine électrique synchrone multipolaire, à pôles saillants, dont le refroidissement de la bobine inductrice est optimisé tout en permettant une réalisation et un montage du rotor simple, économique et rapide et peu sensible à la pollution.

A cette fin, l'invention propose un rotor d'une machine tournante synchrone multipolaire selon la revendication 1.

Grâce à l'invention, il est possible de réaliser facilement des bobines inductrices ajourées permettant un refroidissement efficace de la bobine inductrice tout en garantissant un montage simple sur les corps polaires. La conception de la bobine par couches de fils bobiné qui sont maintenues espacées par des entretoises permet de garantir une circulation d'un fluide de refroidissement entre les différentes couches de la bobine inductrice tout en garantissant un maintien radial lors de la rotation du rotor.

Le rotor de machine électrique synchrone multipolaire, à pôles saillants, selon l'invention peut également présenter une ou plusieurs des caractéristiques ci-dessous, considérées individuellement ou selon toutes les combinaisons techniquement possibles :
- chaque pôle saillant de ladite pluralité de pôles saillants comporte une pluralité de cornes polaires amovibles se faisant face de part et d'autre dudit corps polaire ;
- chaque corne polaire de ladite pluralité de cornes polaires est emboitée dans ledit corps polaire, ledit corps polaire comportant deux rainures agencées de part et d'autre dudit corps polaire et dont la forme est adaptée pour recevoir lesdites cornes polaires se faisant face ;
- lesdites deux rainures sont réalisées en continu le long dudit corps polaire ;
- chaque couche de fil bobiné de ladite pluralité de couches est formée au moyen d'un fil conducteur méplat ;
- ledit deuxième espacement est créé par chaque entretoise de ladite pluralité d'entretoises.

La présente invention a également pour objet un procédé de refroidissement d'un rotor d'une machine tournante synchrone multipolaire caractérisé en ce qu'il comporte les étapes suivantes :
- refroidissement de ladite pluralité de couches de fil bobiné par la circulation du fluide de refroidissement au travers dudit deuxième espacement ;
- refroidissement de chaque couche de fil bobiné de ladite pluralité de couches par la circulation du fluide de refroidissement au travers dudit premier espacement.

Selon une autre caractéristique, le procédé est tel qu'il comporte une étape de circulation du fluide caloporteur entre l'évidement et ledit deuxième espacement au moyen dudit conduit de ladite tôle support.

Les caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue partielle d'un rotor à pôles saillants d'une machine électrique synchrone en coupe par un plan perpendiculaire à l'axe de rotation du rotor, selon un premier mode de réalisation ;
- la figure 2 est une vue de dessus d'un corps polaire d'un rotor à pôles saillants tel que représenté à la figure 1 ;
- la figure 3 est une vue partielle d'un rotor à pôles saillants d'une machine électrique synchrone en coupe par un plan perpendiculaire à l'axe de rotation du rotor selon un deuxième mode de réalisation.

Dans toutes les figures, les éléments communs portent les mêmes numéros de référence sauf précision contraire.

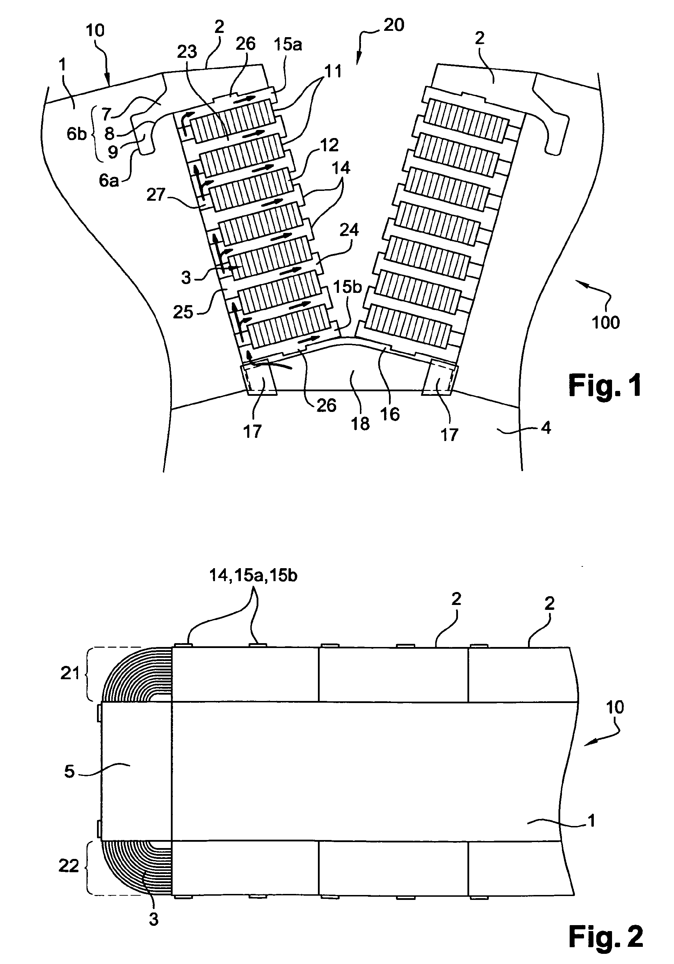

La figure 1 représente une vue partielle d'un rotor 100 à pôles saillant d'une machine synchrone en coupe par un plan perpendiculaire à l'axe de rotation du rotor.

La figure 1 représente particulièrement un espace 20 située entre deux pôles saillants 10. Chaque pôle saillant 10 comporte un corps de pôle ou corps polaire 1 entouré d'une bobine inductrice 3. Le corps polaire 1 est une pièce faisant partie intégrante d'une jante 4 constituant la roue polaire du circuit magnétique de la machine électrique synchrone. La jante 4 est préférentiellement réalisée par un empilement de tôles d'acier magnétique monté à chaud sur un arbre ou un moyeu (non représenté).

Selon un autre mode de réalisation le corps polaire 1 est une pièce massive monobloc faisant partie intégrante de l'arbre.

Selon un mode avantageux de l'invention, la jante 4 possède une forme sensiblement polygonale. La forme polygonale de la jante est définie en fonction du nombre de pôles que possède le rotor de la machine synchrone.

La bobine inductrice 3 est réalisée par un conducteur en cuivre de section circulaire ou rectangulaire entourant le corps polaire 1 avec un certain nombre de spires. Dans ce premier mode de réalisation, la bobine inductrice 3 est réalisée en couches radiales 11 (i.e. disposées selon différents rayons en partant du centre du rotor) de fil de bobinage conducteur méplat 12 enroulé en spirale. Chaque couche radiale 11 est espacée radialement par des entretoises 14, 15a et 15b. Les entretoises 14, 15a et 15b sont formées soit par un matériau isolant soit par un matériau conducteur nécessitant d'être isolé par un matériau isolant, les entretoises en matériau conducteur ayant de meilleures caractéristiques mécaniques.

L'isolation des spires de la bobine inductrice 3 est réalisée par des bandes isolantes pré-imprégnées d'une résine thermodurcissable. La bobine est ensuite mise sous presse et subit un traitement thermique ce qui permet d'obtenir un ensemble compact avec une excellente conductivité thermique.

Selon un autre mode de l'invention, la bobine inductrice 3 est réalisée avec des fils guipés en fibre de verre. Le fil isolé est ensuite enroulé sur plusieurs couches. Entre chaque couche de fils, on interpose un vernis ou une résine qui a pour rôle de donner la rigidité finale de la bobine inductrice 3 après polymérisation.

Il est également possible, selon une autre mode de réalisation de l'invention, de réaliser la bobine inductrice 3 avec des fils émaillés thermo-adhérants. Les fils thermo-adhérants sont des fils émaillés recouverts d'une couche externe permettant d'obtenir un collage des spires assemblées par polymérisation de cette couche externe sous l'effet de la température et permettant de s'affranchir d'une phase d'application d'un vernis ou d'une résine lors de la réalisation de la bobine inductrice 3.

Des cornes polaires 2 sont situées, par paire, de part et d'autre du corps polaire 1 sur toute sa longueur, une seule paire corne polaire 2 étant représentée sur chaque corps polaire 1 de la figure 1. Les paires de cornes polaires 2 maintiennent en position la bobine inductrice 3 de part et d'autre du corps polaire 1. A cet effet, le corps polaire 1 comporte des encoches 6a correspondant à la forme des accroches 6b des cornes polaire 2 ; les encoches 6a de chaque tôle de l'empilage étant alignées sur toute la longueur du corps polaire 1 formant ainsi un conduit. Les accroches 6b permettent la mise en place par emboîtage puis par glissement dans les encoches 6a des cornes polaires 2 sans autre moyen de fixation. L'emboitage s'effectue à partir de chaque extrémité du corps polaire 1 et le glissement suivant le sens longitudinal dudit corps polaire 1. Les accroches 6b ont la forme par exemple d'un crochet orienté sensiblement vers le centre du rotor, composé d'une première partie 7 de section sensiblement triangulaire rejoignant une deuxième partie 9 de section sensiblement rectangulaire, les deux parties 7 et 9 étant raccordées par un élément coudé 8.

La forme particulière des accroches 6b permet un maintien radial des cornes polaires 2, et permet d'encaisser les sollicitations occasionnées par la force centrifuge de la bobine inductrice 3 lors de la rotation du rotor, et notamment de la composante radiale.

Les entretoises 14, 15a et 15b sont intercalées uniformément entre les différentes couches radiales 11 formant ainsi un espace 23 inter couche radiale 11 permettant une circulation d'un fluide de refroidissement entre les couches radiales 11 illustrée par des flèches. Sur une couche radiale 11, les entretoises 14, 15a et 15b sont réparties uniformément sur toute la longueur de la couche radiale 11. Selon un mode avantageux de l'invention, chaque entretoise 14, 15a et 15b est espacée longitudinalement d'une deuxième entretoise, d'une distance sensiblement comprise entre une dizaine et une centaine de millimètres.

Les entretoises 14 sont des plaques symétriques par rapport à un plan horizontal ayant une forme sensiblement rectangulaire de plusieurs millimètres d'épaisseur. Les entretoises 14 comportent une surépaisseur 24 à leur extrémité droite et une surépaisseur 25 à leur extrémité gauche, les surépaisseurs 24 et 25 étant symétriques de part et d'autre du plan de symétrie horizontal. Ainsi, les surépaisseurs 24 et 25 permettent d'englober et de maintenir bordé deux couches radiales 11 de la bobine inductrice 3, une couche radiale 11 dans la partie supérieure de l'entretoise 14 et une couche radiale 11 dans la partie inférieure de l'entretoise. Ainsi de par leur forme et leur disposition, les entretoises 14 permettent de maintenir séparé les différentes couches radiales 11 de la bobine inductrice 3 en créant l'espace 23 inter-couches pour la circulation d'un fluide de refroidissement illustrée par des flèches sur la figure 1.

Les surépaisseurs gauches 25 des entretoises 14 sont également aptes à maintenir écarté la bobine inductrice 3 de la périphérie du corps polaire 1, la face externe de l'entretoise 14 au niveau de la surépaisseur 25 étant en contact avec le corps polaire 1. De cette façon, un espace 27 est formé entre la bobine inductrice 3 et la surface externe du corps polaire 1 ; l'espace 27 étant équivalent à la largeur de la surépaisseur 25. Ainsi, l'espace 27 garantit la circulation du fluide de refroidissement et garantit l'isolation à la masse entre la bobine inductrice 2 et la surface périphérique du corps polaire 1.

Les entretoises supérieures 15a et inférieures 15b, c'est-à-dire les entretoises disposées au dessus de la dernière couche radiale 11 ou couche supérieure et en dessous de la première couche radiale 11 ou couche inférieure de la bobine inductrice 3 ont une forme légèrement différente des entretoises 14 détaillées précédemment. Les entretoises 15a et 15b sont également des plaques ayant une forme sensiblement rectangulaire de quelques millimètres d'épaisseur. Les entretoises 15a et 15b comportent également une surépaisseur gauche et une surépaisseur droite à leurs deux extrémités mais uniquement sur une des deux faces de l'entretoise. La deuxième face de l'entretoise 15a, 15b comporte une surépaisseur centrale 26 de forme sensiblement rectangulaire située sensiblement en son centre permettant de positionner les entretoises 15a et 15b et de les maintenir fixe.

La face supérieure de l'entretoise supérieure 15a comportant la surépaisseur 26 permet de maintenir et de positionner l'entretoise 15a au moyen des cornes polaires 2 lorsque celles-ci sont mises en position sur le corps polaire 1. De façon similaire, la face inférieure de l'entretoise inférieure 15b comportant la surépaisseur centrale 26 permet de positionner et de maintenir fixe l'entretoise 15b au moyen de la tôle support 16.

Les cornes polaires 2 et la tôle support 16 possèdent une découpe de matière de la forme de la surépaisseur des entretoises 15a et 15b de façon à épouser ladite surépaisseur et à maintenir lesdites entretoises.

La tôle support 16 est une tôle pliée en forme de V disposée au niveau d'un espace 20 du rotor 100 à pôles saillants, c'est-à-dire entre deux pôles saillants 10 et plus précisément entre deux corps polaires 1.

Au niveau de l'espace 20 du rotor 100, deux bobines inductrices 3, entourant chacune un corps polaire 1, sont en vis-à-vis. La tôle support 16 maintient la partie des bobines inductrices en vis-à-vis au niveau de l'espace 20 du rotor 100. Pour cela, la tôle support 16 est introduite entre deux corps polaires 1 lorsque les bobines inductrices 3 sont montées autour des corps polaires 1 et que les cornes polaires 2 sont introduites dans le corps polaire 1. Dans une première réalisation illustrée à la figure 1, des blocs de fixation 17 sont utilisés sous la tôle support 16 afin de maintenir plaquer radialement la bobine inductrice 3 contre les cornes polaires 2 avec une certaine pression.

Le maintien radial de la bobine inductrice 3 est réalisé dans sa partie supérieure par les cornes polaires 2, et dans sa partie inférieure par la tôle support 16. Le maintien radial de la bobine inductrice 3 dans sa partie inférieure peut également être réalisé par tout autre moyen équivalent permettant de maintenir la bobine inductrice 3 plaquée contre les cornes polaires 2.

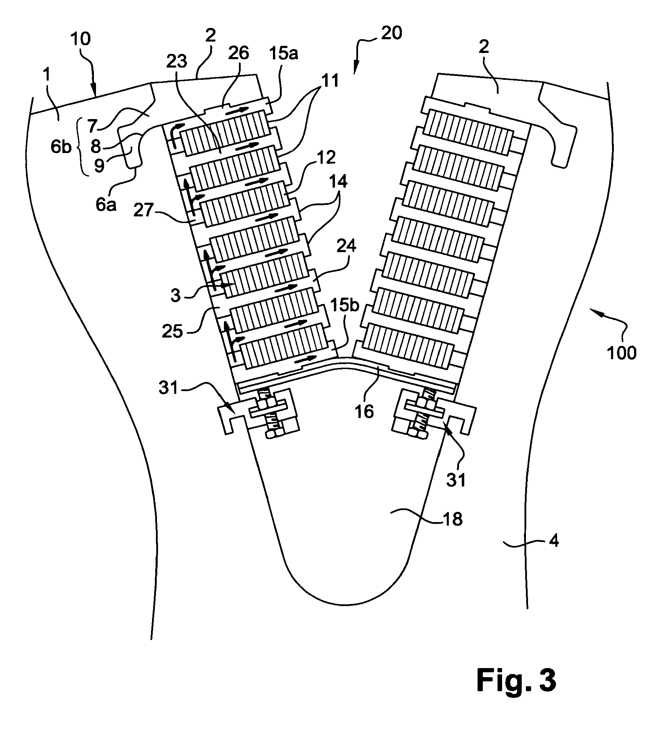

Selon un deuxième mode de réalisation, le maintien radial de la bobine inductrice 3 dans sa partie inférieure peut s'effectuer au moyen d'un jeu de ressorts comprimés 31, illustrés en référence à la figure 3.

Ainsi, les entretoises 14, 15a et 15b ainsi que la pression de maintien exercée sur la bobine inductrice 3 et sur les entretoises par les cornes polaires 2 dans sa partie supérieure et par la tôle support 16 dans sa partie inférieure, permettent de maintenir la bobine inductrice 3 en position et notamment de compenser la composante tangentielle de la force centrifuge lors de la rotation du rotor.

Un espace 18 est prévu sous la tôle support 16. Cet espace 18 est apte d'une part à faciliter l'introduction de la tôle support 16 sous les bobines inductrices 3 et d'autre part à permettre une distribution longitudinale du fluide de refroidissement conduisant à la circulation du fluide, illustrée par des flèches, à travers les couches radiales 11 de la bobine inductrice 3.

Dans un autre mode de réalisation de l'invention, illustré par la figure 3, il est également possible d'agrandir l'espace 18 en effectuant un évidement de la jante 4 de façon à augmenter la circulation du fluide de refroidissement à l'intérieur de la bobine inductrice 3. Il est également possible de disposer un ventilateur à l'entrée de cet espace 18 afin de créer un flux de circulation du fluide de refroidissement ou d'augmenter le flux de circulation naturelle créé par la rotation du rotor.

Lors de la rotation du rotor 100, l'air ambiant ou le fluide de refroidissement environnant s'engouffre dans l'espace 18 ; le flux de fluide de refroidissement entrant pouvant être augmenté par l'ajout d'un ventilateur à l'entrée de l'espace 18 comme décrit précédemment.

Le fluide de refroidissement circule à travers la bobine inductrice 3 selon les flèches illustrées explicitant la circulation.

Le fluide de refroidissement migre alors de l'espace 18 à travers un conduit présent dans la tôle support 16 vers l'espace 27. Le fluide de refroidissement circule ensuite de l'espace 27 vers les espaces inter-couches 20 créés par les entretoises 14, 15a et 15b, puis s'échappe vers l'espace 20 permettant ainsi son renouvellement.

Le fluide de refroidissement circulant dans les espaces 27 et 23 effectue des échanges thermiques avec les différentes couches radiales 11 de la bobine inductrice 3 permettant ainsi un refroidissement avantageux de la bobine.

Il est également possible d'obturer l'espace 20 entre deux pôles saillants de façon à obliger la circulation d'un passage d'air dans l'espace 18 et ainsi améliorer le refroidissement de la bobine inductrice 3 par l'augmentation du débit de circulation du fluide de refroidissement à travers les couches radiales 11.

La figure 2 est une vue de dessus d'un corps polaire 1 d'un rotor 100 à pôles saillants 10 d'une machine électrique synchrone selon l'invention représenté en référence à la figure 1.

La figure 2 illustre particulièrement une série de cornes polaires 2 mises en position sur le corps polaire 1 et bloquant radialement la bobine inductrice 3 du pôle.

Des joues 5, situées aux extrémités du corps polaire 1 (seule une joue 5 est représentée), sont maintenues solidaires de la jante 4 au moyen d'un système de fixation du type vis. Les joues 5 sont des pièces massives en acier usinées, forgées ou moulées qui permettent de maintenir en position les cornes polaires 2 après leur mise en place sur le corps polaire 1. Elles évitent ainsi tout déplacement longitudinal des cornes polaires 2. En effet aux extrémités du corps polaire 1, les joues 5 obstruent les encoches 6a du corps polaire 1 correspondant aux accroches 6b de sorte que les cornes polaires 2 ne puissent plus être démontées, ni déplacées dans le sens longitudinal du corps polaire 1. Les joues 5 permettent également de maintenir radialement la partie frontale de la bobine inductrice 3 et positionne axialement l'ensemble de la bobine inductrice 3.

L'utilisation combinée des cornes polaires 2 et des joues 5 en remplacement d'un épanouissement polaire selon l'art antérieur permet de disposer de deux zones 21 et 22 de non recouvrement, à chaque extrémité de la bobine inductrice 3. Ces zones 21 et 22 améliorent le refroidissement de la bobine inductrice 3 en augmentant sa surface de contact avec l'air ambiant ou tout autre fluide de refroidissement.

Le dispositif illustré à la figure 3 comporte les mêmes éléments et les mêmes références que le dispositif illustré à la figure 1 et 2, à l'exception du moyen de maintien radial de la bobine inductrice 3 par un jeu de ressorts comprimés 31.

De plus, la figure 3 illustre un deuxième mode de réalisation de l'espace 18 effectuant un évidement de la jante 4 permettant d'augmenter la circulation du fluide de refroidissement à l'intérieur de la bobine inductrice 3.

Le montage du rotor à pôles saillants d'une machine synchrone illustré se réalise facilement et rapidement avec un nombre restreint d'outillage.

Dans une première étape, la bobine inductrice 3 est réalisée séparément par couches radiales 11 puis assemblée avec les entretoises 14, 15a, 15b. Selon un second mode de réalisation, la bobine inductrice 3 peut être réalisée par spires successives sur chaque couche, en partant d'une couche externe de la bobine inductrice puis en remontant couche par couche vers la couche interne de la bobine inductrice 3 puis en redescendant vers la couche externe : cette opération est répétée jusqu'au bobinage complet de la bobine. Ce mode de réalisation permet ainsi de diminuer le nombre de connexions brasées.

Dans une deuxième étape, la bobine inductrice 3 complète et polymérisée est ensuite introduite autour du corps polaire 1 dans une position plus proche du centre rotor, permettant de dégager complètement les rainures 6a du corps polaire 1.

Les cornes polaires 2 sont enfilées par glissement sur le corps polaire 1 au moyen des encoches 6a.

Les joues 5 sont ensuite enfilées et fixées sur la jante 4 ou sur le corps polaire 1 au moyen de vis. Les cornes polaires 2 sont ainsi bloquées longitudinalement.

La bobine inductrice 3 est alors plaquée contre les cornes polaires 2 de façon à libérer un espace 18 sous la bobine inductrice dans le but d'introduire par glissement dans le sens longitudinal du corps polaire 1, la tôle support 16. La tôle support 16 est ensuite maintenue plaquée contre la bobine inductrice 3 au moyen de blocs de fixation 17 montés en force, de jeu de ressorts comprimés 31 ou de tout autre moyen équivalent.

Les blocs de fixation 17, ou le jeu de ressorts comprimés 31 exercent une certaine pression de contact sur la bobine qui est maintenue d'une part par les cornes polaires 2 dans sa partie extérieure et d'autre part par la tôle support 16 dans sa partie intérieure. Ainsi la bobine inductrice 3 est maintenue radialement lors de l'arrêt et de la rotation du rotor.

Toutes les opérations décrites pour le montage des cornes polaires 2, et des joues 5 sur le corps polaire 1 sont effectuées facilement sans outillage particulier.

Ainsi, l'invention a pour objet la réalisation d'un rotor multipolaire, à pôles saillants, d'une machine électrique synchrone permettant le refroidissement efficace de la bobine inductrice améliorant ainsi significativement la durée de vie des bobinages. De plus, la forme astucieuse des cornes polaires combinées à l'utilisation des entretoises permettent de diminuer significativement l'utilisation de coin de calage pour le maintien tangentiel de la bobine inductrice lors de la rotation du rotor et permettent ainsi une amélioration du refroidissement de la bobine avec l'augmentation de la surface de la bobine en contact avec un fluide de refroidissement tel que de l'air.

Enfin, le rotor à pôles saillant selon l'invention permet un montage simple et rapide sans outillages spéciaux. La forme astucieuse des cornes polaires permet à la fois un montage rapide et facile et à la fois un maintien de la bobine inductrice lors de l'arrêt et lors de la rotation du rotor.

De plus, lorsqu'il est nécessaire de nettoyer, de réparer ou de remplacer une bobine inductrice, l'opération de démontage est à la fois largement facilitée, sans le recours à des outillages spéciaux, et rapide.

Il a été essentiellement décrit un rotor multipolaire à pôles saillants d'une machine électrique synchrone comportant un corps polaire feuilleté et une jante feuilleté ; toutefois, l'invention est également applicable à un rotor multipolaire à pôles saillants d'une machine électrique synchrone comportant un corps polaire massif. L'invention a essentiellement décrit un rotor multipolaire à pôles saillants comportant des corps polaires intégrés à la jante du rotor ; toutefois, l'invention est également applicable à un rotor multipolaire à pôles saillants comportant des corps polaires rapportés sur une jante ou sur un arbre au moyen de clefs, de queues d'aronde, ou de vis.

Les autres avantages de l'invention sont notamment les suivants :
- amélioration du refroidissement du rotor multipolaire avec la suppression de l'utilisation des coins de calage ;
- facilitation de la mise en oeuvre industrielle;
- augmentation significative de la durée de vie des bobinages ;
- surpression de la nécessité d'une isolation à la masse des bobines inductrices.
- démontabilité aisée des bobines inductrices lors d'opération de maintenance ou de rénovation ou de réparation.
- insensibilité aux conséquences électriques de la pollution des bobines inductrices.

## Revendications

1. Rotor d'une machine tournante synchrone multipolaire comportant :
- une pluralité de pôles saillants (10) comportant un corps polaire (1), chaque pôle saillant (10) étant entouré par une bobine inductrice (3) comportant une pluralité de couches de fil bobiné (11), ladite pluralité de pôles saillants (10) étant solidaire d'une couronne (4), ladite couronne (4) comportant un évidement (18), située entre deux pôles saillants (10), apte au refroidissement du rotor ;
- une pluralité d'entretoises (14, 15a, 15b), de sorte que chaque entretoise de ladite pluralité d'entretoises (14, 15a, 15b) crée un premier espacement (23) entre deux couches de fil bobiné (11) successives de ladite pluralité de couches pour la circulation d'un fluide caloporteur entre chaque couche de fil bobiné (11) de ladite pluralité de couches, ledit rotor comportant un deuxième espacement (27) entre ledit corps polaire (1) et chaque couche de fil bobiné (11) de ladite pluralité de couches pour la circulation dudit fluide caloporteur entre ladite bobine inductrice (3) et ledit corps polaire (1) ;
ledit rotor étant **caractérisé en ce que** :
- ladite pluralité de couches de fil bobiné (11) formant la bobine inductrice (3) est maintenue radialement au moyen d'une tôle support (16) ;
- ledit rotor comporte un ventilateur créant un flux de circulation axial dudit fluide caloporteur dans ledit évidement (18) situé entre deux pôles saillants (10) et sous ladite tôle support (16) ;
- ladite tôle support (16) comporte au moins un conduit pour la circulation d'un fluide caloporteur dudit évidement (18) vers ledit deuxième espacement; ledit premier et ledit deuxième espacement étant agencés de sorte que ledit fluide caloporteur circule dudit deuxième espacement vers ledit premier espacement entre deux couches de fil bobiné.

2. Rotor d'une machine tournante synchrone multipolaire selon la revendication précédente **caractérisé en ce que** chaque pôle saillant (10) de ladite pluralité de pôles saillants (10) comporte une pluralité de cornes polaires (2) amovibles se faisant face de part et d'autre dudit corps polaire (1).

3. Rotor d'une machine tournante synchrone multipolaire selon la revendication 2 **caractérisé en ce que** chaque corne polaire (2) de ladite pluralité de cornes polaires (2) est emboitée dans ledit corps polaire (1), ledit corps polaire (1) comportant deux rainures (6a) agencées de part et d'autre dudit corps polaire (1) et dont la forme est adaptée pour recevoir lesdites cornes polaires (2) se faisant face.

4. Rotor d'une machine tournante synchrone multipolaire selon la revendication 3 **caractérisé en ce que** lesdites deux rainures (6a) sont réalisées en continu le long dudit corps polaire (1).

5. Rotor d'une machine tournante synchrone multipolaire selon l'une des revendications 1 à 4 **caractérisé en ce que** chaque couche de fil bobiné (11) de ladite pluralité de couches est formée au moyen d'un fil conducteur méplat (12).

6. Rotor d'une machine tournante synchrone multipolaire selon l'une des revendications 1 à 5 **caractérisé en ce que** ledit deuxième espacement (27) est créé par chaque entretoise de ladite pluralité d'entretoises (14, 15a, 15b).

## Patentansprüche

1. Läufer einer synchronen multipolaren drehenden Maschine, aufweisend:
- eine Vielzahl hervorstehender Pole (10), einen Polkörper (1) aufweisend, wobei jeder hervorstehende Pol (10) von einer Induktionsspule (3) umgeben ist, die eine Vielzahl von Wickeldrahtschichten (11) aufweist, wobei die Vielzahl hervorstehender Pole (10) mit einem Kranz (4) fest verbunden ist, wobei der Kranz (4) eine Aussparung (18) aufweist, die sich zwischen zwei hervorstehenden Polen (10) befindet, die zur Kühlung des Läufers imstande ist,
- eine Vielzahl von Zwischenstreben (14, 15a, 15b), so dass jede Zwischenstrebe der Vielzahl von Zwischenstreben (14, 15a, 15b) eine erste Beabstandung (23) zwischen zwei aufeinanderfolgenden Wickeldrahtschichten (11) der Vielzahl von Schichten für die Zirkulation eines Kühlfluids zwischen jeder Wickeldrahtschicht (11) der Vielzahl von Schichten bildet, wobei der Läufer eine zweite Beabstandung (27) zwischen dem Polkörper (1) und jeder Wickeldrahtschicht (11) der Vielzahl von Schichten für die Zirkulation des Kühlfluids zwischen der Induktionsspule (3) und dem Polkörper (1) aufweist,
wobei der Läufer **dadurch gekennzeichnet ist, dass**:
- die Vielzahl von Wickeldrahtschichten (11), die die Induktionsspule (3) bilden, mit Hilfe einer Stützplatte (16) radial gehalten wird,
- der Läufer einen Lüfter aufweist, der einen axialen Zirkulationsstrom des Kühlfluids in der Aussparung (18) bildet, die sich zwischen zwei hervorstehenden Polen (10) und unter der Stützplatte (16) befindet,
- die Stützplatte (16) wenigstens eine Leitung für die Zirkulation eines Kühlfluids von der Aussparung (18) zur zweiten Beabstandung aufweist, wobei die erste und die zweiten Beabstandung derart ausgebildet sind, dass das Kühlfluid von der zweiten Beabstandung zur ersten Beabstandung zwischen zwei Wickeldrahtschichten zirkuliert.

2. Läufer einer synchronen multipolaren drehenden Maschine nach vorangehendem Anspruch, **dadurch gekennzeichnet, dass** jeder hervorstehende Pol (10) der Vielzahl hervorstehender Pole (10) eine Vielzahl lösbarer Polhörner (2) aufweist, die sich beidseits des Polkörpers (1) gegenüberstehen.

3. Läufer einer synchronen multipolaren drehenden Maschine nach Anspruch 2, **dadurch gekennzeichnet, dass** jedes Polhorn (2) der Vielzahl von Polhörnern (2) in den Polkörper (1) eingerastet ist, wobei der Polkörper (1) zwei Rillen (6a) aufweist, die beidseits des Polkörpers (1) ausgebildet sind und deren Form für die Aufnahme der sich gegenüberstehenden Polhörner (2) geeignet ist.

4. Läufer einer synchronen multipolaren drehenden Maschine nach Anspruch 3, **dadurch gekennzeichnet, dass** die zwei Rillen (6a) kontinuierlich entlang des Polkörpers (1) realisiert sind.

5. Läufer einer synchronen multipolaren drehenden Maschine nach einem der Ansprüche 1 bis 4, **dadurch gekennzeichnet, dass** jede Wickeldrahtschicht (11) der Vielzahl von Schichten mittels eines abgeflachten leitenden Drahts (12) gebildet ist.

6. Läufer einer synchronen multipolaren drehenden Maschine nach einem der Ansprüche 1 bis 5, **dadurch gekennzeichnet, dass** die zweite Beabstandung (27) von jeder Zwischenstrebe der Vielzahl von Zwischenstreben (14, 15a, 15b) gebildet ist.

## Claims

1. A rotor for a multipolar synchronous rotating machine comprising:
- a plurality of salient poles (10) including a pole body (1), each salient pole (10) being surrounded by an induction coil (3) comprising a plurality of layers of coiled wire (11), said plurality of salient poles (10) being integral with a ring (4), said ring (4) including a recess (18), located between two salient poles (10), able to cool the rotor;
- a plurality of spacers (14, 15a, 15b), so that each spacer of the said plurality of spacers (14, 15a, 15b) creates a first spacing (23) between two successive layers of coiled wire (11) of said plurality of layers for flowing a coolant fluid between each layer of coiled wire (11) of said plurality of layers, said rotor including a second spacing (27) between said pole body (1) and each layer of coiled wire (11) of said plurality of layers for flowing said coolant fluid between said induction coil (3) and said pole body (1);
said rotor being **characterized in that**:
- said plurality of layers of coiled wire (11) forming the induction coil (3) is held radially by means of a support sheet (16);
- said rotor includes a fan creating an axial flow stream of said coolant fluid in said recess (18) located between two salient poles (10) and beneath said support sheet (16);
- said support sheet (16) includes at least one duct for flowing a coolant fluid from said recess (18) towards said second spacing;
said first and said second spacing are arranged so that said coolant fluid flows from said second spacing to said first spacing between two layers of coiled wire.

2. The rotor of a multipole synchronous rotating machine according to the previous claim, **characterized in that** each salient pole (10) of said plurality of salient poles (10) includes a plurality of removable pole tips (2) facing each other on either side of said pole body (1).

3. The rotor of a multipole synchronous rotating machine according to claim 2, **characterized in that** each pole tip (2) of said plurality of pole tips (2) is fitted into said pole body(1), said pole body(1) including two grooves (6a) arranged on either side of said pole body(1) and the shape of which is suitable for receiving said pole tips (2) facing each other.

4. The rotor of a multipole synchronous rotating machine according to claim 3, **characterized in that** said two grooves (6a) are made continuously along said pole body (1).

5. The rotor of a multipole synchronous rotating machine according to one of claims 1 to 4, **characterized in that** each layer of coiled wire (11) of said plurality of layers is formed by means of a flat lead wire (12).

6. The rotor of a multipole synchronous rotating machine according to one of claims 1 to 5, **characterized in that** said second spacing (27) is created by each spacer of said plurality of spacers (14, 15a, 15b).
